# EUROPÄISCHE PATENTANMELDUNG

(11) **EP 3 556 580 A1**
(43) Veröffentlichungstag der Anmeldung: **23.10.2019**
(21) Anmeldenummer: 19020298.6
(22) Anmeldetag: 18.04.2019
(51) Int. Cl.: B60G 21/00, B60G 21/055

(54) **AKTIVE STABILISIERUNGSVORRICHTUNG**

(30) Priorität: 18.04.2018 LU 100770
(71) Anmelder: Ovalo GmbH, 65555 Limburg (DE)
(72) Erfinder:
(74) Vertreter: Grabovac, Dalibor

(57) **Zusammenfassung**

Die Erfindung betrifft eine aktive Stabilisierungsvorrichtung mit einem ersten Aktuator (1), der einen ersten Antriebsmotor (2) und ein dem ersten Antriebsmotor (2) triebtechnisch nachgeschaltetes erstes Getriebe (3) aufweist, dessen Getriebeabtrieb (4) dazu ausgebildet und bestimmt ist, mit einer linken Radaufhängung (44) einer Fahrzeugachse verkoppelt zu werden, und mit einem zweiten Aktuator (15), der einen zweiten Antriebsmotor (16) und ein dem zweiten Antriebsmotor (16) triebtechnisch nachgeschaltetes zweites Getriebe (17) aufweist, dessen Getriebeabtrieb (18) dazu ausgebildet und bestimmt ist, mit einer rechten Radaufhängung (46) einer Fahrzeugachse verkoppelt zu werden. Die aktive Stabilisierungsvorrichtung zeichnet sich dadurch aus, dass ein Abtrieb (7) des ersten Antriebsmotors (2) oder ein Getriebeantrieb (51) des ersten Getriebes (3) mittels einer Drehmomentübertragungsvorrichtung (29) mit einem Abtrieb des zweiten Antriebsmotors (16) oder einem Getriebeantrieb (52) des zweiten Getriebes (17) drehmomentübertragend verbunden ist, wobei der Kraftfluss der Verbindung außerhalb des ersten Getriebes und außerhalb des zweiten Getriebes verläuft.

## Beschreibung

Die Erfindung betrifft eine aktive Stabilisierungsvorrichtung mit einem ersten Aktuator, der einen ersten Antriebsmotor und ein dem ersten Antriebsmotor triebtechnisch nachgeschaltetes erstes Getriebe aufweist, dessen Getriebeabtrieb dazu ausgebildet und bestimmt ist, mit einer linken Radaufhängung einer Fahrzeugachse verkoppelt zu werden, und mit einem zweiten Aktuator, der einen zweiten Antriebsmotor und ein dem zweiten Antriebsmotor triebtechnisch nachgeschaltetes zweites Getriebe aufweist, dessen Getriebeabtrieb dazu ausgebildet und bestimmt ist, mit einer rechten Radaufhängung einer Fahrzeugachse verkoppelt zu werden.

Die Erfindung betrifft außerdem ein Fahrwerk mit wenigstens einer solchen aktiven Stabilisierungsvorrichtung und ein Fahrzeug mit wenigstens einer solchen aktiven Stabilisierungsvorrichtung.

Rein passive Stabilisatoren haben ein Kopierverhalten, das das zusätzliche Einfedern des kurvenäußeren Rades und das Ausfedern des kurveninneren Rades einer Fahrzeugachse verringert. Die Hebelarme des Stabilisators werden hierbei einander entgegengesetzt belastet und der Stabilisatormittelteil wird tordiert.

Aktive Stabilisierungssysteme, insbesondere zur Verbesserung des Wankverhaltens bei Kurvenfahrten und/oder zum Vermeiden oder Reduzieren von Nickbewegungen beim Anfahren oder Bremsen, sind in unterschiedlichsten Ausführungsformen bekannt.

Beispielsweise gibt es Systeme, bei denen zwischen den Stabilisatorstangenhälften eines geteilten Stabilisators ein aktiv geregelter Aktuator angeordnet ist, der je nach Fahrsituation die Stabilisatorstangenhälften gegeneinander verdreht, um einer durch die Zentrifugalkraft bewirkten Seitneigung des Fahrzeuges entgegen zu wirken. Hierbei wird das jeweils kurvenäußere Rad einer Achse mit einer zusätzlichen Kraft in Richtung Fahrbahn beaufschlagt, während das kurveninnere Rad mit einer von der Fahrbahn weg gerichteten Kraft beaufschlagt wird.

Aus DE 10 2005 031 036 A1 ist ein Schwenkmotor zur Wankregelung durch gegeneinander Verdrehen von zwei Kraftfahrzeugstabilisatoren bekannt. Der Schwenkmotor besteht mindestens aus einem Verstellantrieb mit einem Elektromotor, einem Schwenkmotorgetriebe und einem Gehäuse. Der Schwenkmotor ist zwischen den Kraftfahrzeugstabilisatoren, die auch als Hälften eines Gesamtstabilisators angesehen werden können, angeordnet und dazu bestimmt, aufgrund einer geeigneten Ansteuerung, diese Stabilisatorhälften bedarfsgerecht gegeneinander zu verdrehen.

Aus DE 10 2006 040 109 A1 ist ein aktiver, geteilter Kraftfahrzeugstabilisator mit eingebautem Schwenkmotor bekannt. Der Kraftfahrzeugstabilisator dient zur Wankregelung und weist einen Verstellantrieb mit einem Motor, einem Getriebe und mit einem Gehäuse auf. An einem Gehäuseteil ist ein Sensor zur Erfassung des Torsionwinkels des Stabilisatorteils angebracht, dessen Geber am Stabilisatorteil fixiert ist oder umgekehrt.

Aus DE 10 2008 048 950 A1 ist ein druckmittelbetätigbarer Schwenkmotor für ein Fahrzeug bekannt, der in einem geteilten Stabilisator angeordnet ist und mit dem die beiden Stabilisatorhälften zum Ausgleich von Fahrzeugbewegungen zueinander schwenkbar sind. Der Schwenkmotor weist einen in einem Gehäuse axial verschiebbaren Kolben und beidseitig zum Kolben angeordnete Arbeitsräume auf. Durch eine Druckmittelbeaufschlagung der Arbeitsräume in Verbindung mit einem oder mehreren Koppelelementen ist ein Drehmoment zwischen den Stabilisatorhälften erzeugbar. Zwischen den Arbeitsräumen besteht eine Verbindung, die mittels eines Ventils in Abhängigkeit von dem Fahrzustand des Fahrzeugs schließbar oder freigebbar ist.

Aus DE 10 2009 013 053 A1 ist ein Stabilisator für ein Fahrwerk eines Kraftfahrzeuges mit zumindest zwei Stabilisatorelementen bekannt, welche mittels zumindest eines elektromotorischen Aktuators zur Wankregelung verdrehbar sind und welche jeweils über zumindest eine Koppelstange mit dem Fahrwerk verbunden sind. Der Stabilisator ist mittels zumindest einer hydraulischen Freischalteinrichtung entkoppelbar.

Aus EP 2 011 674 A1 ist eine Stabilisatoranordnung, umfassend einen zweigeteilten Stabilisator, dessen Stabilisatorabschnitte eine rotatorische Relativbewegung zueinander ausführen und bei einer gegensinnigen Verdrehbelastung eine Rückstellkraft ausüben, bekannt. Die Rückstellkraft ist mittels eines Aktuators in Verbindung mit einem Getriebe einstellbar, wobei die Stabilisatoranordnung unabhängig von einer Torsionsfederwirkung der Stabilisatorabschnitte mindestens eine weitere Feder aufweist, die eine Torsionsfederwirkung bewirkt.

Eine ähnliche Vorrichtung ist aus DE 10 2009 006 385 A1 bekannt. Konkret offenbart diese Druckschrift einen Schwenkmotor für einen aktiven Wankstabilisator, der mit seinem Antrieb an eine Stabilisatorhälfte und der statorseitig an eine andere Stabilisatorhälfte eines geteilten Stabilisators angeschlossen werden kann.

Aus DE 10 2008 010 131 A1 ist ein Wankstabilisator für ein Kraftfahrzeug mit einem ersten und einem zweiten Stabilisatorteil, welche jeweils einem Rad einer gemeinsamen Fahrzeugquerachse des Kraftfahrzeugs zuordenbar und/oder zugeordnet sind, bekannt. Der Wankstabilisator weist ein Gehäuse auf, welches für eine kraftfahrzeugfeste Montage ausgebildet ist und in dem die zwei Stabilisatorteile zur Durchführung von gleichsinnigen und gegensinnigen Schwenkbewegungen gelagert sind. Außerdem ist eine Aktuatorvorrichtung vorgesehen, welche einen Elektromotor und ein Übertragungsgetriebe umfasst, wobei der Elektromotor zur Erzeugung eines Drehmoments und das Übertragungsgetriebe zur Weiterführung des Drehmoments an die Stabilisatorteile ausgebildet und/oder angeordnet sind, und wobei der Elektromotor von der Schwenkbewegung der Stabilisatorteile entkoppelt gelagert ist.

Außer dem vorgenannten Typ von Stabilisatorsystemen gibt es auch Systeme mit mehreren Aktuatoren, bei denen jeweils ein Aktuator ausschließlich einer Radaufhängung zugeordnet ist. Bei einem solchen System kann der Höhenstand eines Rades relativ zur Karosserie unabhängig von der Einstellung bei einem anderen Rad, insbesondere unabhängig vom Höhenstand des Rades derselben Fahrzeugachse, eingestellt werden. Ein solches System hat den Vorteil, dass die Räder einer Fahrzeugachse mit gleichgerichteten Kräften und/oder Drehmomenten beaufschlagt werden können, um beispielsweise einer Nickbewegung beim Anfahren und/oder Bremsen entgegenwirken zu können. Ein solches System ist beispielsweise aus DE 10 2010 037 180 A1 und aus DE 10 2010 037 555 A1 bekannt. Derartige Systeme haben jedoch nicht das Kopierverhalten eines klassischen, passiven Stabilisators.

Aus DE 10 2014 225 294 A1 ist ein aktives Fahrwerksystem für ein Kraftfahrzeug bekannt, das eine Verstelleinrichtung mit jeweils einem Aktuator, über welchen je zwei Koppelstangen mithilfe jeweils eines Getriebes relativ zueinander verschwenkbar sind, aufweist. Um auch bei fehlender Betätigung oder einem Ausfall des Aktuators die beiden Koppelstangen zu koppeln und damit zumindest eine passive Funktion des Fahrwerksystems zu gewährleisten, ist das Getriebe als Überlagerungsgetriebe gestaltet, bei welchem die beiden Koppelstangen an den Abtriebsseiten und der Aktuator an einer Antriebsseite angebunden und somit untereinander gekoppelt sind.

Aus WO 2015/014439 A1 ist ein Drehfederstabsystem für eine Radaufhängung eines Kraftfahrzeugs bekannt, die je Fahrzeugseite einen insbesondere quer zur Fahrzeuglängsmitte ausgerichteten Drehfederstab aufweist, der über einen mit Bezug zur Fahrzeuglängsmitte äußeren Abtriebshebel auf jeweils ein Radführungselement der Radaufhängung mit veränderlicher Vorspannung wirkt, wobei der Drehfederstab mittels eines Aktuators mit einem Torsionsmoment beaufschlagbar ist. Zur Erzielung einer Belastungsspitzen kompensierenden Konstruktion wird vorgeschlagen, dass die beiden etwa in der Fahrzeuglängsmitte axial benachbarten Enden der Drehfederstäbe über zumindest ein zusätzliches Drehfederelement miteinander gekoppelt sind.

Aus DE 10 2004 004 335 A1 ist Fahrwerksanordnung für ein Fahrzeug, mit einer linken Stabilisatorhälfte zur Anbindung an eine linke Radführung einer Achse, einer rechten Stabilisatorhälfte zur Anbindung an eine rechte Radführung der Achse und einem Aktuator zum Schwenken der Stabilisatorhälften bekannt. Der Aktuator weist ein mit einem Fahrzeugaufbau verbindbares oder verbundenes Gehäuse, eine linke Antriebseinheit zum Schwenken der linken Stabilisatorhälfte gegenüber dem Gehäuse, eine rechte Antriebseinheit zum Schwenken der rechten Stabilisatorhälfte gegenüber dem Gehäuse und eine Kupplungsanordnung zum Blockieren der Antriebseinheiten auf. Durch Ansteuerung der Antriebseinheiten und der Kupplungsanordnung kann eine aktive Stabilisatorstellung, passive Stabilisatorstellung und eine Niveauregulierungs- oder Nickausgleichsstellung mit Anhebung der Achse eingestellt werden.

Aus WO 2017/042055 A1 ist ein Dämpfungssystem eines zweispurigen Fahrzeugs, umfassend einen passiven Stabilisator mit einem in Fahrzeug-Querrichtung verlaufenden Drehstab und sich endseitig an diesen anschließenden und mit den einander gegenüberliegenden Radaufhängungen einer Achse des Fahrzeugs verbundenen Hebelelementen, weiterhin mit zwei jeweils einem Rad der Radaufhängung zugeordneten und am Fahrzeugaufbau gelagerten Aktuatoren mit jeweils einem Antrieb, mit dem ein Drehmoment auf den dem jeweiligen Rad zugewandten Abschnitt des Stabilisators aufbringbar ist, bekannt. Die Aktuatoren sind als Elektromotoren ausgebildet und ausgelegt, durch geeignete Regelung ihres Antriebs und somit auch durch aktive Einleitung von Kräften in das System Vertikal-Schwingungen des jeweiligen Rades oder der sog. ungefederten Masse und/oder Schwingungen des Fahrzeugaufbaus in einem Frequenzbereich zwischen 0 Hertz und zumindest 20 Hertz zu bedämpfen.

Aus DE 102009047128 A1 ist ein Fahrwerk für ein Fahrzeug bekannt. Das Fahrwerk weist zwischen gegenüberliegenden Radaufhängungen eine Kraftübertragungseinrichtung mit mindestens einem Aktuator zur veränderlichen Einstellung der auf die Radaufhängungen wirkenden Kräfte auf. Über die Kraftübertragungseinrichtung sind gleichgerichtete Vertikalkräfte auf die Radaufhängungen übertragbar.

Es ist daher die Aufgabe der vorliegenden Erfindung, eine aktive Stabilisierungsvorrichtung der eingangs genannten Art anzugeben, die ein verbessertes Fahrverhalten ermöglicht.

Die Aufgabe wird durch eine aktive Stabilisierungsvorrichtung gelöst, die dadurch gekennzeichnet ist, dass ein Abtrieb des ersten Antriebsmotors oder ein Getriebeantrieb des ersten Getriebes mittels einer Drehmomentübertragungsvorrichtung mit einem Abtrieb des zweiten Antriebsmotors oder einem Getriebeantrieb des zweiten Getriebes drehmomentübertragend verbunden ist, wobei der Kraftfluss der Verbindung außerhalb des ersten Getriebes und außerhalb des zweiten Getriebes verläuft.

Die erfindungsgemäße aktive Stabilisierungsvorrichtung hat den besonderen Vorteil, dass sich die Aktuatoren der unterschiedlichen Fahrzeugseiten gegenseitig unmittelbar beeinflussen, beispielsweise um zusätzlich zu den Möglichkeiten einer aktiven Steuerung ein Kopierverhalten wie bei einem klassischen, passiven Stabilisator zu erreichen.

Prinzipiell wäre es auch möglich, eine Kopplung der linken Radaufhängung mit der rechten Radaufhängung durch eine drehmomentübertragende Verbindung zwischen dem ersten Getriebeabtrieb des ersten Aktuators und dem zweiten Getriebeabtrieb des zweiten Aktuators zu erreichen. Dies hat jedoch den Nachteil, dass das Reibmoment überwunden werden muss, welches durch das jeweils über die Kopplung, beispielsweise einen Torsionsstab, getriebene Getriebe erzeugt wird. Das Reibmoment ist abhängig von der Untersetzung des Getriebes gleichzeitig eine Funktion der Massenträgheiten der zu beschleunigenden Komponenten des Getriebes sowie der Überwindung des Reibmomentes des Zahneingriffes. Aus diesen Gründen wäre die Übertragung sehr großer Drehmomente zwischen den Aktuatoren nötig, da vor dem Zurücktreiben der koppelnde Torsionsstab verdrillt wird und erst beim Erreichen eines Losbrechmomentes der über die Kopplung getriebene Aktuator reagiert. Hierdurch hierbei kann es beispielsweise zu einem Überschwingen des getriebenen Aktuators kommen, was nur aufwändig und umständlich durch regelungstechnische Eingriffe reduziert werden kann.

Dieser Nachteil ist vermieden, wenn ein Abtrieb des ersten Antriebsmotors oder ein Getriebeantrieb des ersten Getriebes mittels einer Drehmomentübertragungsvorrichtung mit einem Abtrieb des zweiten Antriebsmotors oder einem Getriebeantrieb des zweiten Getriebes drehmomentübertragend verbunden ist, wobei der Kraftfluss der Verbindung außerhalb des ersten Getriebes und außerhalb des zweiten Getriebes verläuft. Daher kann erfindungsgemäß vorteilhaft vorgesehen sein, dass die Drehmomentübertragungsvorrichtung (ggf. abgesehen von dem ersten und dem zweiten Getriebeantrieb, die durch die Drehmomentübertragungsvorrichtung drehmomentübertragend verbunden sind) keine weiteren Bauteile des ersten und zweiten Getriebes beinhaltet. Es ist vorteilhaft insbesondere möglich, dass Bauteile der Drehmomentübertragungsvorrichtung gemeinsam einstückig mit dem ersten Getriebeantrieb und/oder dem zweiten Getriebeantrieb hergestellt sind.

Durch die Kopplung der schnellen Getriebeseiten der Aktuatoren wird vorteilhaft außerdem erreicht, dass der Umfang von Regelungseingriffen, etwa zur Reduktion des Losbrechmomentes oder des Überschwingens, zumindest deutlich reduziert ist.

Durch die Kopplung der schnellen Getriebeseiten der Aktuatoren wird vorteilhaft außerdem erreicht, dass wesentlich geringere Drehmomente zwischen den Aktuatoren zu übertragen sind, so dass die Drehmomentübertragungsvorrichtung entsprechend bauraum- und gewichtssparend ausgeführt sein kann. Insbesondere können die Bauteile der Drehmomentübertragungsvorrichtung, wie beispielsweise Übertragungswellen oder Torsionsstäbe, dünner und leichter dimensioniert werden.

Durch die Kopplung der schnellen Getriebeseiten der Aktuatoren wird außerdem vorteilhaft erreicht, dass das Ansprechverhalten deutlich gesteigert und das Kopierverhalten markant verbessert wird.

Durch die Kopplung der schnellen Getriebeseiten der Aktuatoren mittels einer Drehmomentübertragungsvorrichtung wird vorteilhaft unter anderem das Ansprechverhalten deutlich gesteigert und das Kopierverhalten einer Achse markant verbessert.

Um zu erreichen, dass der Kraftfluss der drehmomentübertragenden Verbindung außerhalb des ersten Getriebes und außerhalb des zweiten Getriebes verläuft, kann vorteilhaft insbesondere vorgesehen sein, dass die Drehmomentübertragungsvorrichtung (ggf. abgesehen von dem ersten und dem zweiten Getriebeantrieb, die durch die Drehmomentübertragungsvorrichtung drehmomentübertragend verbunden sind) weder das erste Getriebe, noch das zweite Getriebe beinhaltet. Es ist jedoch durchaus vorteilhaft möglich, dass die Drehmomentübertragungsvorrichtung wenigstens ein eigenes Getriebe, beispielsweise ein Schraubengetriebe, beinhaltet, das nicht das erste Getriebe und nicht das zweite Getriebe ist.

Insbesondere kann vorteilhaft vorgesehen sein, dass der erste Aktuator samt dem ersten Getriebe in einem ersten Bereich angeordnet ist, während der der zweite Aktuator samt dem zweiten Getriebe in einem dritten Bereich angeordnet. Die Drehmomentübertragungsvorrichtung kann vorteilhaft räumlich zwischen dem ersten Bereich und dem dritten Bereich angeordnet sein.

Bei einer vorteilhaften Ausführung weist die Drehmomentübertragungsvorrichtung wenigstens eine Torsionsfedervorrichtung auf. Es kann insbesondere auch vorgesehen sein, dass die Drehmomentübertragungsvorrichtung als eine Torsionsfedervorrichtung ausgebildet ist. Die Torsionsfedervorrichtung kann beispielsweise wenigstens einen elastisch tordierbaren Torsionsstab aufweisen. Bei einer besonderen Ausführung weist die Torsionsfedervorrichtung wenigstens zwei in Reihe geschaltete oder zwei in Reihe schaltbare elastisch tordierbare Torsionsstäbe auf.

Insbesondere um eine sehr weiche Ankopplung zu erreichen kann eine elastische Tordierbarkeit erforderlich sein, die mit einem einfachen Torsionsstab nicht realisierbar ist. So lassen sich die Enden eines Torsionsstabes nicht um beliebig große Verdrehwinkel gegeneinander Verdrehen, ohne dass es zu einer Zerstörung des Torsionsstabes, beispielsweise durch plastische Verformung oder Bruch, kommt. Aus diesem Grunde ist bei einer ganz besonders vorteilhaften Ausführung vorgesehen, dass die von einem der Aktuatoren in die Drehmomentübertragungsvorrichtung eingetragene Rotationsbewegung zunächst in eine Translationsbewegung, insbesondere gegen die Rückstellkraft einer translatorisch auf Druck und/oder Zug spannbaren Feder, eines Bauteils der Drehmomentübertragungsvorrichtung übersetzt wird und diese anschließend, insbesondere bewirkt durch die Rückstellkraft einer translatorisch auf Druck und/oder Zug spannbaren Feder, wieder in eine Rotationsbewegung eines mit dem anderen Aktuator drehfest verbundenen Bauteils übersetzt wird.

Insbesondere durch Zwischenspeicherung der von einem der Aktuatoren in die Drehmomentübertragungsvorrichtung eingetragenen Rotationsenergie in eine translatorisch spannbare Feder kann eine elastische Verdrehbarkeit der Ankopplungen der Drehmomentübertragungsvorrichtung an die Aktuatoren um sehr große Verdrehwinkel, insbesondere sogar um Vielfache von 360 Grad, erreicht werden.

Bei einer besonders vorteilhaften Ausführung beinhaltet die Torsionsfedervorrichtung eine Vorrichtung zum Übersetzen einer Rotationsbewegung in eine Translationsbewegung und/oder eine Vorrichtung zum Übersetzen einer Translationsbewegung in eine Rotationsbewegung. Die Torsionsfedervorrichtung kann hierzu vorteilhaft insbesondere wenigsten ein Schraubengetriebe aufweisen. Insbesondere kann das Schraubengetriebe beispielsweise wenigstens eine Gewindespindel, insbesondere eine Kugelumlaufspindel oder eine Rollengewindespindel, aufweisen.

Wie bereits erwähnt kann vorteilhaft vorgesehen sein, dass die Torsionsfedervorrichtung wenigstens eine translatorisch spannbare Feder, die vorzugsweise auf Zug und auf Druck belastbar ist, beinhaltet. Die translatorisch spannbare Feder kann beispielsweise als Linearfeder oder als Schraubenfeder oder als Evolutfeder oder als Tellerfeder ausgebildet sein.

Bei einer vorteilhaften Ausführung sind das Schraubengetriebe und die translatorisch spannbare Feder wirktechnisch in Reihe geschaltet. Insbesondere kann vorteilhaft vorgesehen sein, dass die Torsionsfedervorrichtung zwei Schraubengetriebe, insbesondere mit gleicher Gewindedrehrichtung, aufweist, die mittels der translatorisch spannbaren Feder wirkverbunden sind.

Bei einer ganz besonders vorteilhaften Ausführung beinhaltet die Drehmomentübertragungsvorrichtung eine selbstschaltende oder schaltbare Kupplung, mittels der die drehmomentübertragende Verbindung des Abtriebs des ersten Antriebsmotors oder des Getriebeantriebs des ersten Getriebes mit dem Abtrieb des zweiten Antriebsmotors oder dem Getriebeantrieb des zweiten Getriebes unterbrochen und geschlossen werden kann.

Beispielsweise kann vorteilhaft vorgesehen sein, dass die Kupplung in geöffneter Stellung eine durch ein Ausfedern oder Einfedern eines Rades einer Fahrzeugseite über ein Rücktreiben des Getriebes eines der Aktuatoren bewirkte Rotationsbeschleunigung des Abtriebs des Antriebsmotors und des Getriebeantriebs zulässt, ohne dass gleichzeitig eine Übertragung der Rotationsbewegung an den anderen Aktuator stattfindet. Erst wenn der Getriebeantrieb des rückgetriebenen Getriebes ausreichend in Rotation gekommen ist, wird die Kupplung, beispielsweise durch eine elektronische Steuerung und/oder beispielsweise durch ihre Ausbildung als Fliehkraftkupplung, geschlossen und die drehmomentübertragende Verbindung mit dem anderen Aktuator hergestellt. Auf diese Weise kann der Getriebeantrieb des anderen Aktuators viel leichter beschleunigt werden, weil die durch die Untersetzung bedingten Reibwiderstände des zweiten Getriebes leichter überwunden werden.

Zusätzlich zu den oben beschriebenen Maßnahmen wird durch eine selbstschaltende oder schaltbare Kupplung das Ansprechverhalten gesteigert und das Kopierverhalten verbessert.

Die Kupplung kann beispielsweise als Klauenkupplung oder als Reibkupplung oder als Fluidkupplung ausgebildet sein. Insbesondere im Hinblick auf ein automatisches Schalten kann die Kupplung beispielsweise als Fliehkraftkupplung ausgebildet sein. Ganz allgemein kann vorteilhaft vorgesehen sein, dass die selbstschaltende oder schaltbare Kupplung (30) dazu ausgebildet ist, die drehmomentübertragende Verbindung form- oder kraftschlüssig herzustellen.

Bei einer besonderen Ausführung ist die Kupplung elektrisch schaltbar ausgebildet. Beispielsweise kann eine elektronische und/oder elektrische Steuerungsvorrichtung vorhanden sein, die den Schaltzustand der Kupplung automatisch und/oder fahrsituationsabhängig und/oder vorausschauend steuert.

Beispielsweise kann vorgesehen sein, dass die Kupplung geöffnet wird, um ein Kopierverhalten vorausschauend auszuschalten, nachdem ein optischer Sensor ein Schlagloch entdeckt hat, in das das Rad einer Fahrzeugseite absehbar rollen wird, während gleichzeitig das Rad der anderen Fahrzeugseite absehbar in kein Schlagloch rollt. Eine solche Steuerung wirkt sich vorteilhaft auf den Fahrkomfort und das Fahrverhalten aus.
Beispielsweise kann auch vorgesehen sein, dass die Kupplung vorausschauend vor einer Kurvenfahrt oder zu Beginn einer Kurvenfahrt automatisch geschlossen wird, um ein Kopierverhalten vorausschauend zu erreichen.

Bei einer besonders sicheren Ausführung ist die elektrisch schaltbare Kupplung geöffnet, wenn an der Kupplung eine elektrische Spannung anliegt, wobei sich die Kupplung automatisch schließt, wenn an der Kupplung keine elektrische Spannung anliegt. Insbesondere auf diese Weise wird vorteilhaft erreicht, dass sich die Kupplung im Falle eines Ausfalls der Spannungsversorgung automatisch schließt und so die drehmomentübertragende Verbindung der Aktuatoren hergestellt wird. Die aktive Stabilisierungsvorrichtung weist dann in diesem Notfallmodus stets ein Kopierverhalten auf, was für den Fahrkomfort zwar nachteilig, jedoch für das Fahrverhalten in der Regel sicherer ist.

Bei einer vorteilhaften Ausführung ist die Kupplung als Sicherheitskupplung ausgebildet, die die drehmomentübertragende Verbindung des Abtriebs des ersten Antriebsmotors oder des Getriebeantriebs des ersten Getriebes mit dem Abtrieb des zweiten Antriebsmotors oder dem Getriebeantrieb des zweiten Getriebes automatisch unterbricht, wenn ein Drehmoment einwirkt, das wenigstens ein Bauteil der aktiven Stabilisierungsvorrichtung überlasten würde. Auf diese Weise ist das Risiko einer Beschädigung der aktiven Stabilisierungsvorrichtung insbesondere auch bei Belastungsspitzen wirkungsvoll vermieden. Hierzu kann die selbstschaltende oder schaltbare Kupplung beispielsweise als Rutschkupplung ausgebildet sein oder eine Rutschkupplung beinhalten.

Es ist es auch möglich, dass alternativ oder zusätzlich zu der selbstschaltenden oder schaltbaren Kupplung eine Sicherheitskupplung vorhanden ist, die die drehmomentübertragende Verbindung des Abtriebs des ersten Antriebsmotors oder des Getriebeantriebs des ersten Getriebes mit dem Abtrieb des zweiten Antriebsmotors oder dem Getriebeantrieb des zweiten Getriebes automatisch unterbricht, wenn ein Drehmoment einwirkt, das wenigstens ein Bauteil der aktiven Stabilisierungsvorrichtung überlasten würde. Beispielsweise kann die zusätzliche Sicherheitskupplung als Rutschkupplung ausgebildet sein oder eine Rutschkupplung beinhalten.

Vorzugsweise ist der erste Aktuator dazu ausgebildet, den Höhenstand einer Fahrzeugkarosserie relativ zu dem an einer linken Radaufhängung angeordneten Rad einzustellen, während der zweite Aktuator dazu ausgebildet ist, den Höhenstand einer Fahrzeugkarosserie relativ zu dem an einer rechten Radaufhängung angeordneten Rad einzustellen.

Von besonderem Vorteil ist ein Fahrwerk mit einer linken und einer rechten Radaufhängung, die derselben Fahrzeugachse zugeordnet sind, das eine erfindungsgemäße aktive Stabilisierungsvorrichtung aufweist, wobei der Getriebeabtrieb des ersten Getriebes mit der linken Radaufhängung wirkverkoppelt ist und der Getriebeabtrieb des zweiten Getriebes mit der rechten Radaufhängung wirkverkoppelt ist. Insbesondere kann das Fahrwerk mehrere Achsen aufweisen, wobei vorzugsweise jede Achse eine erfindungsgemäße aktive Stabilisierungsvorrichtung aufweist.

Von besonderem Vorteil ist außerdem ein Fahrzeug, insbesondere Kraftfahrzeug, das ein solches Fahrwerk aufweist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine schematische Darstellung eines ersten Ausführungsbeispiels einer erfindungsgemäßen aktiven Stabilisierungsvorrichtung,
- Fig. 2: eine schematische Darstellung eines zweiten Ausführungsbeispiels einer erfindungsgemäßen aktiven Stabilisierungsvorrichtung,
- Fig. 3: eine schematische Darstellung eines dritten Ausführungsbeispiels einer erfindungsgemäßen aktiven Stabilisierungsvorrichtung,
- Fig. 4: eine schematische Darstellung eines vierten Ausführungsbeispiels einer erfindungsgemäßen aktiven Stabilisierungsvorrichtung,
- Fig. 5: eine schematische Detailansicht eines Ausführungsbeispiels einer Torsionsfedervorrichtung für eine Drehmomentübertragungs-vorrichtung zum drehmomentübertragenden Verbinden eines Abtriebs des ersten Antriebsmotors oder eines Getriebeantriebs des ersten Getriebes mit einem Abtrieb des zweiten Antriebsmotors oder einem Getriebeantrieb des zweiten Getriebes,
- Fig. 6: eine schematische Detaildarstellung eines Ausführungsbeispiels eines erfindungsgemäßen Fahrwerks, und
- Fig. 7: eine schematische Darstellung eines Ausführungsbeispiels eines Fahrzeugs mit einem erfindungsgemäßen Fahrwerk.

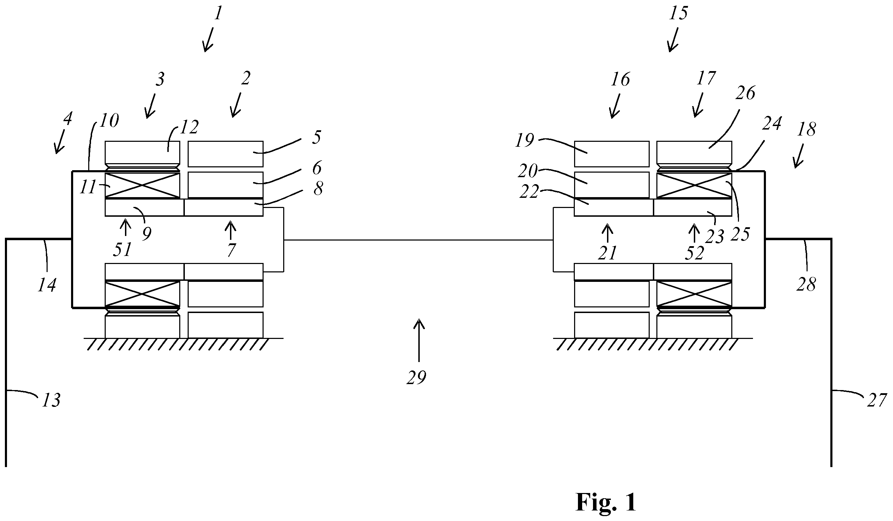

Fig. 1 zeigt eine schematische Darstellung eines ersten Ausführungsbeispiels einer erfindungsgemäßen aktiven Stabilisierungsvorrichtung. Die aktive Stabilisierungsvorrichtung weist einen ersten Aktuator 1 auf, der einen ersten Antriebsmotor 2 und ein dem ersten Antriebsmotor 2 triebtechnisch nachgeschaltetes erstes Getriebe 3 aufweist.

Der Getriebeabtrieb 4 des ersten Getriebes 3 ist dazu ausgebildet und bestimmt, mit einer linken Radaufhängung einer Fahrzeugachse verkoppelt zu werden. Hierzu ist der Getriebeabtrieb 4 drehfest mit einem Hebelarm 13 verbunden, der dazu bestimmt ist, gelenkig mit einer (in dieser Figur nicht dargestellten) linken Radaufhängung 44, insbesondere einem Querlenker einer linken Radaufhängung 44 verbunden zu werden.

Der erste Antriebsmotor 2 weist einen karosseriefest angeordneten Stator 5 und einen Rotor 6 auf. Der Rotor 6 treibt den Abtrieb 7 des ersten Antriebsmotors 2, nämlich eine Abtriebswelle 8, rotierend an. Die Abtriebswelle 8 ist drehfest mit dem Wellengenerator 9 des als Spannungswellengetriebe ausgebildeten ersten Getriebes 3 verbunden. Der Wellengenerator 9 bildet den Getriebeantrieb 51 des ersten Getriebes 3 und ist in einem außenverzahnten Flextopf 10 mittels eines radialflexiblen Wälzlagers 11 rotierbar gelagert. Die Außenverzahnung des außenverzahnten Flextopfs 10 steht mit einer Innenverzahnung eines karosseriefest angeordneten Circularspline 12 in Zahneingriff. Eine mit dem Flextopf 10 drehfest verbundene erste Getriebeabtriebswelle 14 bildet den Getriebeabtrieb 4 des ersten Getriebes 3.

Die aktive Stabilisierungsvorrichtung weist einen zweiten Aktuator 15 auf, der einen zweiten Antriebsmotor 16 und ein dem zweiten Antriebsmotor 16 triebtechnisch nachgeschaltetes zweites Getriebe 17 aufweist.

Der Getriebeabtrieb 18 des zweiten Getriebes 17 ist dazu ausgebildet und bestimmt, mit einer rechten Radaufhängung 46 einer Fahrzeugachse verkoppelt zu werden. Hierzu ist der Getriebeabtrieb 17 drehfest mit einem Hebelarm 27 verbunden, der dazu bestimmt ist, gelenkig mit einer rechten Radaufhängung 46, insbesondere einem Querlenker einer rechten Radaufhängung 46 verbunden zu werden.

Der zweite Antriebsmotor 16 weist einen karosseriefest angeordneten Stator 19 und einen Rotor 20 auf. Der Rotor 20 treibt den Abtrieb 21 des zweiten Antriebsmotors 16, nämlich eine Abtriebswelle 22 rotierend an. Die Abtriebswelle 22 ist drehfest mit dem Wellengenerator 23 des als Spannungswellengetriebe ausgebildeten zweiten Getriebes 14 verbunden. Der Wellengenerator 23 des zweiten Getriebes 17 bildet den Getriebeantrieb 52 des zweiten Getriebes 15 und ist in einem außenverzahnten Flextopf 24 mittels eines radialflexiblen Wälzlagers 25 rotierbar gelagert. Die Außenverzahnung des außenverzahnten Flextopfs 24 steht mit einer Innenverzahnung eines karosseriefest angeordneten Circularspline 26 in Zahneingriff. Eine mit dem Flextopf 24 drehfest verbundene zweite Getriebeabtriebswelle 28 bildet den Getriebeabtrieb 18 des zweiten Getriebes 17.

Der Abtrieb 7, nämlich die Abtriebswelle 8, des ersten Antriebsmotors 2, ist mittels einer Drehmomentübertragungsvorrichtung 29 mit dem Abtrieb 21, nämlich der Abtriebswelle 22, des zweiten Antriebsmotors 16 drehmomentübertragend verbunden. Bei diesem Ausführungsbeispiel besteht die Drehmomentübertragungsvorrichtung 29 aus einem Torsionsstab 31.

Für ein komfortorientiertes Fahren können die Hebelarme 13, 17 weich federnd ausgebildet sein, während sie für ein sportlich orientiertes Fahren hart federnd ausgebildet sein können.

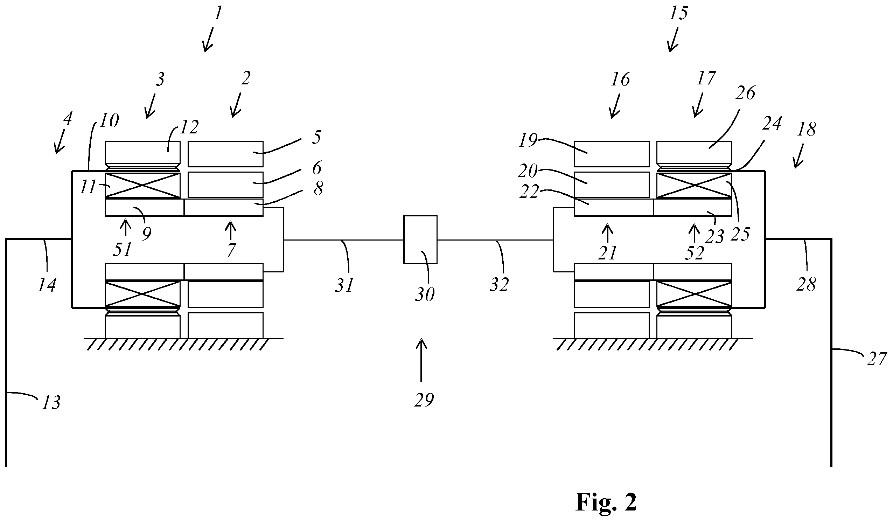

Fig. 2 zeigt eine schematische Darstellung eines zweiten Ausführungsbeispiels einer erfindungsgemäßen aktiven Stabilisierungsvorrichtung, das sich von dem in Figur 1 dargestellten Ausführungsbeispiel durch eine anders ausgebildete Drehmomentübertragungsvorrichtung 29 unterscheidet. Die Drehmomentübertragungsvorrichtung 29 der in Figur 2 dargestellten Ausführung weist eine selbstschaltende oder schaltbare Kupplung 30 auf, mittels der die drehmomentübertragende Verbindung des Abtriebs 7 des ersten Antriebsmotors 2 mit dem Abtrieb 21 des zweiten Antriebsmotors 16 unterbrochen und geschlossen werden kann.

Der Abtrieb 7, nämlich die Abtriebswelle 8, des ersten Antriebsmotors 2, ist mittels eines ersten Torsionsstabs 31 an die selbstschaltende oder schaltbare Kupplung 30 drehmomentübertragend angeschlossen, während der Abtrieb 21, nämlich die Abtriebswelle 22, des zweiten Antriebsmotors 16, mittels eines zweiten Torsionsstabs 32 an die selbstschaltende oder schaltbare Kupplung 30 drehmomentübertragend angeschlossen ist.

Beispielsweise kann die Kupplung 30 in geöffneter Stellung eine durch ein Ausfedern oder Einfedern eines Rades der linken Radaufhängung über ein Rücktreiben des Getriebes 3 eines des Aktuators 1 bewirkte Rotationsbeschleunigung der Antriebswelle 8 des Antriebsmotors 2 zulassen, ohne dass gleichzeitig eine Übertragung der Rotationsbewegung der Antriebswelle 8 an den anderen Aktuator 15 stattfindet. Erst wenn der Getriebeantrieb 51 des rückgetriebenen Getriebes 1 und die Antriebswelle 8 ausreichend in Rotation gekommen ist, wird die Kupplung 30, beispielsweise durch eine elektronische Steuerung und/oder beispielsweise durch ihre Ausbildung als Fliehkraftkupplung, geschlossen und die drehmomentübertragende Verbindung mit dem anderen Aktuator 15 hergestellt. Gleiches geschieht natürlich auch in umgekehrter Richtung bei einem Ausfedern oder Einfedern eines Rades 47 der rechten Radaufhängung 46.

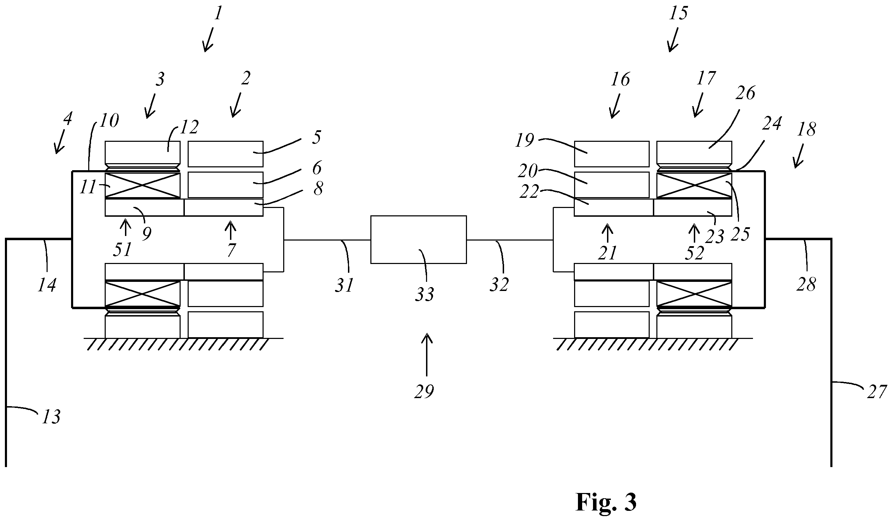

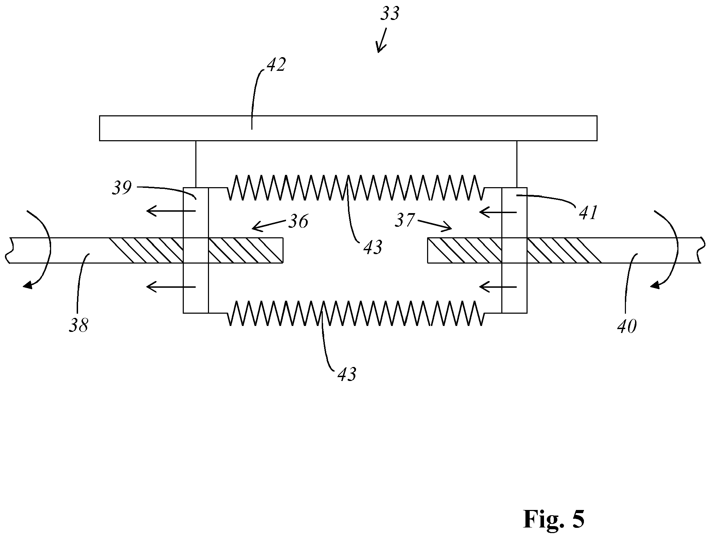

Fig. 3 zeigt eine schematische Darstellung eines dritten Ausführungsbeispiels einer erfindungsgemäßen aktiven Stabilisierungsvorrichtung, das sich von dem in Figur 1 dargestellten Ausführungsbeispiel durch eine anders ausgebildete Drehmomentübertragungsvorrichtung 29 unterscheidet. Die Drehmomentübertragungsvorrichtung 29 der in Figur 3 dargestellten Ausführung weist eine Torsionsfedervorrichtung 33, die beispielsweise wie die in Figur 5 dargestellte Torsionsfedervorrichtung 33 ausgebildet sein kann.

Der Abtrieb 7, nämlich die Abtriebswelle 8, des ersten Antriebsmotors 2, ist mittels eines ersten Torsionsstabs 31 an die Torsionsfedervorrichtung 33 drehmomentübertragend angeschlossen, während der Abtrieb 21, nämlich die Abtriebswelle 22, des zweiten Antriebsmotors 16, mittels eines zweiten Torsionsstabs 32 an die Torsionsfedervorrichtung 33 drehmomentübertragend angeschlossen ist.

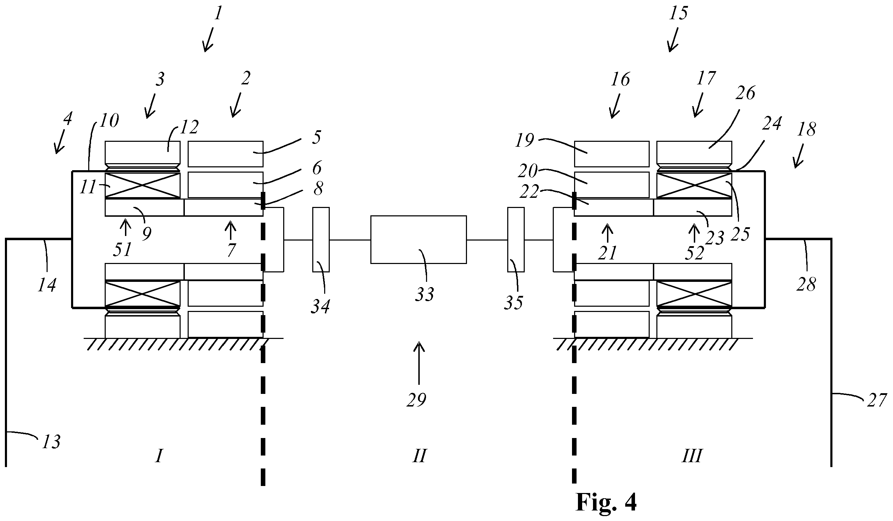

Fig. 4 zeigt eine schematische Darstellung eines vierten Ausführungsbeispiels einer erfindungsgemäßen aktiven Stabilisierungsvorrichtung, das sich von dem in Figur 3 dargestellten Ausführungsbeispiel dadurch unterscheidet, dass der Abtrieb 7 des ersten Antriebsmotors 2 über eine erste selbstschaltende oder schaltbare Kupplung 34 an die Torsionsfedervorrichtung 33 angekoppelt ist und dass der Abtrieb 21 des zweiten Antriebsmotors 16 über eine zweite selbstschaltende oder schaltbare Kupplung 35 an die Torsionsfedervorrichtung 33 angekoppelt ist.

Der erste Aktuator 1 ist samt dem ersten Getriebe 3 in einem ersten Bereich I angeordnet. Der zweite Aktuator 15 ist samt dem zweiten Getriebe 17 in einem dritten Bereich III angeordnet. Räumlich zwischen dem ersten Bereich I und dem dritten Bereich III befindet sich ein zweiter Bereich II, in dem die Drehmomentübertragungsvorrichtung 29 angeordnet ist.

Fig. 5 zeigt eine schematische Detailansicht eines Ausführungsbeispiels einer Torsionsfedervorrichtung 33 für eine Drehmomentübertragungsvorrichtung 29. Die Torsionsfedervorrichtung 33 ist dazu ausgebildet, eine Rotationsbewegung zunächst in eine Translationsbewegung und anschließend wieder in eine Rotationsbewegung zu übertragen.

Die Torsionsfedervorrichtung 33 weist ein erstes Schraubengetriebe 36 und ein zweites Schraubengetriebe 37 auf. Das Schraubengetriebe 36 beinhaltet eine erste Gewindespindel 38 und eine erste Gewindemutter 39. Das zweite Schraubengetriebe 37 beinhaltet eine zweite Gewindespindel 40 und eine zweite Gewindemutter 41. Die erste Gewindemutter 39 und die zweite Gewindemutter 41 sind jeweils an einer Linearführungsvorrichtung 42 drehfest, jedoch unabhängig voneinander in Axialrichtung verschiebbar befestigt.

Die erste Gewindemutter 39 und die zweite Gewindemutter 41 sind mittels translatorisch spannbarer Federn 43, die auf Zug und auf Druck belastbar sind, verbunden.

Wird beispielsweise die erste Gewindespindel 38 in Rotation versetzt (was durch den gebogenen Pfeil angedeutet ist), wird die erste Gewindemutter 39 nach links gezogen (was durch die beiden Pfeile angedeutet ist), wodurch die translatorisch spannbaren Federn 43 auf Zug gespannt werden. Hierdurch wird die zweite Gewindemutter 41 ebenfalls nach links gezogen (was durch die dortigen beiden Pfeile angedeutet ist) und dadurch die zweite Gewindespindel 40 mit demselben Drehsinn wie die erste Gewindespindel 38 in Rotation versetzt.

Bei einer Rotation der ersten Gewindespindel 38 in die andere Richtung, wird die erste Gewindemutter 39 nach rechts geschoben, wodurch die translatorisch spannbaren Federn 43 auf Druck gespannt werden. Hierdurch wird die zweite Gewindemutter 41 ebenfalls nach rechts geschoben und dadurch die zweite Gewindespindel 40 mit demselben Drehsinn wie die erste Gewindespindel 38 in Rotation versetzt.

Die Torsionsfedervorrichtung 33 funktioniert natürlich in analoger Weise auch in umgekehrter Richtung, um eine Rotation der zweiten Gewindespindel 40 auf die erste Gewindespindel 38 zu übertragen.

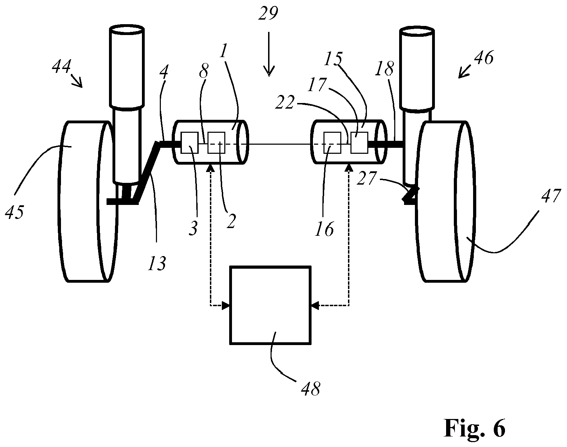

Fig. 6 zeigt eine schematische Detaildarstellung eines Ausführungsbeispiels eines erfindungsgemäßen Fahrwerks, das eine erfindungsgemäße aktive Stabilisierungsvorrichtung beinhaltet.

Die aktive Stabilisierungsvorrichtung weist einen ersten Aktuator 1 auf, der einen ersten Antriebsmotor 2 und ein dem ersten Antriebsmotor 2 triebtechnisch nachgeschaltetes erstes Getriebe 3 aufweist. Der Getriebeabtrieb 4 des ersten Getriebes 3 ist mit einer linken Radaufhängung 44, an der ein linkes Rad 45 befestigt ist, verkoppelt. Hierzu ist der Getriebeabtrieb 4 drehfest mit einem Hebelarm 13 verbunden, der gelenkig mit der linken Radaufhängung 44 verbunden ist.

Die aktive Stabilisierungsvorrichtung weist außerdem einen zweiten Aktuator 15 auf, der einen zweiten Antriebsmotor 16 und ein dem zweiten Antriebsmotor 16 triebtechnisch nachgeschaltetes zweites Getriebe 17 aufweist. Der Getriebeabtrieb 18 des zweiten Getriebes 17 ist mit einer rechten Radaufhängung 46, an der ein rechtes Rad 47 befestigt ist, verkoppelt. Hierzu ist der Getriebeabtrieb 18 drehfest mit einem Hebelarm 27 verbunden, der gelenkig mit der linken Radaufhängung 46 verbunden ist.

Die Aktuatoren 4, 15 werden von einer elektronischen Steuerungsvorrichtung 48 geregelt.

Der Abtrieb 7, nämlich die Abtriebswelle 8, des ersten Antriebsmotors 2, ist mittels einer Drehmomentübertragungsvorrichtung 29 mit dem Abtrieb 21, nämlich der Abtriebswelle 22, des zweiten Antriebsmotors 16 drehmomentübertragend verbunden. Bei diesem Ausführungsbeispiel besteht die Drehmomentübertragungsvorrichtung 29 aus einem Torsionsstab. Sie kann jedoch auch wenigstens eine Kupplung 30 und/oder eine aufwändigere Torsionsfedervorrichtung 33 beinhalten. In diesem Fall kann vorteilhaft insbesondere vorgesehen sein, dass die elektronische Steuerungsvorrichtung 48 auch wenigstens eine schaltbare Kupplung 30 der Drehmomentübertragungsvorrichtung 29 steuert.

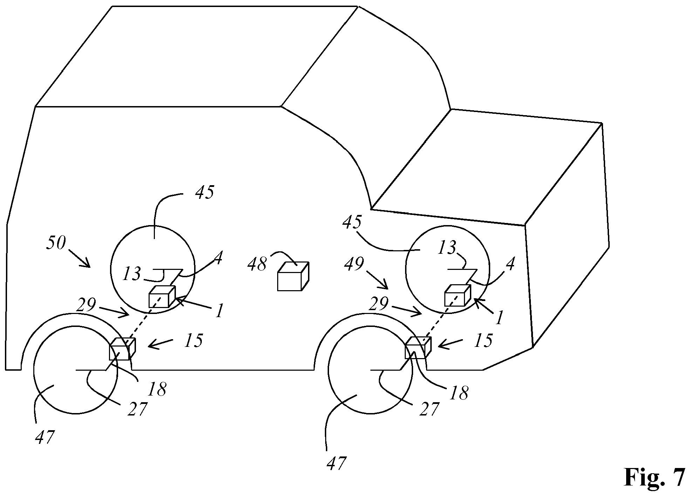

Fig. 7 zeigt eine schematische Darstellung eines Ausführungsbeispiels eines Fahrzeugs mit einem erfindungsgemäßen Fahrwerk. Das Fahrwerk weist an der Vorderachse 49 und an der Hinterachse 50 jeweils eine erfindungsgemäße aktive Stabilisierungsvorrichtung auf.

Die Aktuatoren 1, 15 der aktiven Stabilisierungsvorrichtungen werden von einer elektronischen Steuerungsvorrichtung 48 geregelt.

### Bezugszeichenliste:

- 1: erster Aktuator
- 2: erster Antriebsmotor
- 3: erstes Getriebe
- 4: Getriebeabtrieb
- 5: Stator
- 6: Rotor
- 7: Abtrieb des ersten Antriebsmotors 2
- 8: Abtriebswelle
- 9: Wellengenerator
- 10: außenverzahnter Flextopf
- 11: radialflexibles Wälzlager
- 12: Circularspline
- 13: Hebelarm
- 14: erste Getriebeabtriebswelle
- 15: zweiter Aktuator
- 16: zweiter Antriebsmotor
- 17: zweites Getriebe
- 18: Getriebeabtrieb
- 19: Stator
- 20: Rotor
- 21: Abtrieb
- 22: Abtriebswelle
- 23: Wellengenerator
- 24: Flextopf
- 25: radialflexibles Wälzlager
- 26: Circularspline
- 27: Hebelarm
- 28: zweite Getriebeabtriebswelle
- 29: Drehmomentübertragungsvorrichtung
- 30: Kupplung
- 31: erster Torsionsstab
- 32: zweiter Torsionsstab
- 33: Torsionsfedervorrichtung
- 34: Erste selbstschaltende oder schaltbare Kupplung
- 35: Zweite selbstschaltende oder schaltbare Kupplung
- 36: erstes Schraubengetriebe
- 37: zweites Schraubengetriebe
- 38: erste Gewindespindel
- 39: erste Gewindemutter
- 40: zweite Gewindespindel
- 41: zweite Gewindemutter
- 42: Linearführungsvorrichtung
- 43: Feder
- 44: linke Radaufhängung
- 45: linkes Rad
- 46: rechte Radaufhängung
- 47: rechtes Rad
- 48: Steuerungsvorrichtung
- 49: Vorderachse
- 50: Hinterachse
- 51: Getriebeantrieb des ersten Getriebes 3
- 52: Getriebeantrieb des zweiten Getriebes 17

## Patentansprüche

1. Aktive Stabilisierungsvorrichtung mit einem ersten Aktuator (1), der einen ersten Antriebsmotor (2) und ein dem ersten Antriebsmotor (2) triebtechnisch nachgeschaltetes erstes Getriebe (3) aufweist, dessen Getriebeabtrieb (4) dazu ausgebildet und bestimmt ist, mit einer linken Radaufhängung (44) einer Fahrzeugachse verkoppelt zu werden, und mit einem zweiten Aktuator (15), der einen zweiten Antriebsmotor (16) und ein dem zweiten Antriebsmotor (16) triebtechnisch nachgeschaltetes zweites Getriebe (17) aufweist, dessen Getriebeabtrieb (18) dazu ausgebildet und bestimmt ist, mit einer rechten Radaufhängung (46) einer Fahrzeugachse verkoppelt zu werden, **dadurch gekennzeichnet, dass** ein Abtrieb (7) des ersten Antriebsmotors (2) oder ein Getriebeantrieb (51) des ersten Getriebes (3) mittels einer Drehmomentübertragungsvorrichtung (29) mit einem Abtrieb des zweiten Antriebsmotors (16) oder einem Getriebeantrieb (52) des zweiten Getriebes (17) drehmomentübertragend verbunden ist, wobei der Kraftfluss der Verbindung außerhalb des ersten Getriebes (3) und außerhalb des zweiten Getriebes (17) verläuft.

2. Aktive Stabilisierungsvorrichtung nach Anspruch 1, **dadurch gekennzeichnet, dass**
a. die Drehmomentübertragungsvorrichtung (29) wenigstens eine Torsionsfedervorrichtung (33) aufweist oder als eine Torsionsfedervorrichtung (33) ausgebildet ist, oder dass
b. die Drehmomentübertragungsvorrichtung (29) wenigstens eine Torsionsfedervorrichtung (33) aufweist oder als eine Torsionsfedervorrichtung (33) ausgebildet ist, wobei die Torsionsfedervorrichtung (33) wenigstens einen elastisch tordierbaren Torsionsstab (31) aufweist oder dass
c. die Drehmomentübertragungsvorrichtung (29) wenigstens eine Torsionsfedervorrichtung (33) aufweist oder als eine Torsionsfedervorrichtung (33) ausgebildet ist, wobei die Torsionsfedervorrichtung (33) zwei in Reihe geschaltete oder zwei in Reihe schaltbare elastisch tordierbare Torsionsstäbe (31, 32) aufweist.

3. Aktive Stabilisierungsvorrichtung nach Anspruch 2, **dadurch gekennzeichnet, dass** die Torsionsfedervorrichtung (33) eine Vorrichtung zum Übersetzen einer Rotationsbewegung in eine Translationsbewegung beinhaltet und/oder dass die Torsionsfedervorrichtung (33) eine Vorrichtung zum Übersetzen einer Translationsbewegung in eine Rotationsbewegung beinhaltet.

4. Aktive Stabilisierungsvorrichtung nach einem der Ansprüche 2 bis 3, **dadurch gekennzeichnet, dass**
a. die Torsionsfedervorrichtung (33) wenigsten ein Schraubengetriebe (36) aufweist, oder dass
b. die Torsionsfedervorrichtung (33) wenigsten ein Schraubengetriebe (36) aufweist, das wenigstens eine Gewindespindel (38), insbesondere eine Kugelumlaufspindel oder eine Rollengewindespindel, aufweist.

5. Aktive Stabilisierungsvorrichtung nach einem der Ansprüche 2 bis 4, **dadurch gekennzeichnet, dass**
a. die Torsionsfedervorrichtung (33) wenigstens eine translatorisch spannbare Feder (43) beinhaltet, oder dass
b. die Torsionsfedervorrichtung (33) wenigstens eine translatorisch auf Zug und auf Druck spannbare Feder (43) beinhaltet, oder dass
c. die Torsionsfedervorrichtung (33) wenigstens eine translatorisch, insbesondere auf Zug und auf Druck, spannbare Feder (43) beinhaltet, die als Linearfeder oder als Schraubenfeder oder als Evolutfeder oder als Tellerfeder ausgebildet ist.

6. Aktive Stabilisierungsvorrichtung nach Anspruch 4 und 5, **dadurch gekennzeichnet, dass**
a. das Schraubengetriebe (36) und die translatorisch spannbare Feder (43) wirktechnisch in Reihe geschaltet sind, oder dass
b. die Torsionsfedervorrichtung (33) zwei Schraubengetriebe (36, 37) aufweist, die mittels der translatorisch spannbaren Feder (43) wirkverbunden sind, oder dass
c. die Torsionsfedervorrichtung (33) zwei Schraubengetriebe (36, 37) mit gleicher Gewindedrehrichtung aufweist, die mittels der translatorisch spannbaren Feder (43) wirkverbunden sind.

7. Aktive Stabilisierungsvorrichtung nach einem der Ansprüche 1 bis 6, **dadurch gekennzeichnet, dass** die Drehmomentübertragungsvorrichtung (29) eine selbstschaltende oder schaltbare Kupplung (30) beinhaltet, mittels der die drehmomentübertragende Verbindung des Abtriebs (7) des ersten Antriebsmotors (2) oder des Getriebeantriebs (51) des ersten Getriebes (3) mit dem Abtrieb des zweiten Antriebsmotors (16) oder dem Getriebeantrieb (52) des zweiten Getriebes (17) unterbrochen und geschlossen werden kann.

8. Aktive Stabilisierungsvorrichtung nach Anspruch 7, **dadurch gekennzeichnet, dass**
a. die selbstschaltende oder schaltbare Kupplung (30) die drehmomentübertragende Verbindung form- oder kraftschlüssig herstellt, und/oder dass
b. die selbstschaltende oder schaltbare Kupplung (30) als Klauenkupplung oder als Reibkupplung oder als Fluidkupplung oder als Fliehkraftkupplung ausgebildet ist.

9. Aktive Stabilisierungsvorrichtung nach Anspruch 7 oder 8, **dadurch gekennzeichnet, dass**
a. die selbstschaltende oder schaltbare Kupplung (30) elektrisch schaltbar ist, und/oder dass
b. die selbstschaltende oder schaltbare Kupplung (30) elektrisch schaltbar ist, wobei die Kupplung (30) geöffnet ist, wenn an der Kupplung (30) eine elektrische Spannung anliegt, und dass sich die Kupplung (30) automatisch schließt, wenn an der Kupplung (30) keine elektrische Spannung anliegt, und/oder dass
c. die selbstschaltende oder schaltbare Kupplung (30) elektrisch schaltbar ist, wobei sich die Kupplung (30) im Falle eines Ausfalls der Spannungsversorgung automatisch schließt.

10. Aktive Stabilisierungsvorrichtung nach einem der Ansprüche 1 bis 9, **dadurch gekennzeichnet, dass** eine Sicherheitskupplung vorhanden ist, die die drehmomentübertragende Verbindung des Abtriebs (7) des ersten Antriebsmotors (2) oder des Getriebeantriebs (51) des ersten Getriebes (3) mit dem Abtrieb des zweiten Antriebsmotors (16) oder dem Getriebeantrieb (52) des zweiten Getriebes (17) automatisch unterbricht, wenn ein Drehmoment einwirkt, das wenigstens ein Bauteil der aktiven Stabilisierungsvorrichtung überlasten würde.

11. Aktive Stabilisierungsvorrichtung nach Anspruch 10 und einem der Ansprüche 7 bis 9, **dadurch gekennzeichnet, dass**
a. die selbstschaltende oder schaltbare Kupplung (30) zusätzlich auch die Sicherheitskupplung bildet, oder dass
b. die Sicherheitskupplung zusätzlich zu der selbstschaltenden oder schaltbaren Kupplung (30) vorhanden ist.

12. Aktive Stabilisierungsvorrichtung nach einem der Ansprüche 7 bis 11, **dadurch gekennzeichnet, dass** eine Steuerungsvorrichtung (48) vorhanden ist, die den Schaltzustand der Kupplung (30) automatisch und/oder fahrsituationsabhängig und/oder vorausschauend steuert.

13. Aktive Stabilisierungsvorrichtung nach einem der Ansprüche 1 bis 12, **dadurch gekennzeichnet, dass** der erste Aktuator (1) dazu ausgebildet ist, den Höhenstand einer Fahrzeugkarosserie relativ zu dem an einer linken Radaufhängung (44) angeordneten Rad (45) einzustellen und dass der zweite Aktuator (15) dazu ausgebildet ist, den Höhenstand einer Fahrzeugkarosserie relativ zu dem an einer rechten Radaufhängung (46) angeordneten Rad (47) einzustellen.

14. Fahrwerk mit einer linken und einer rechten Radaufhängung (44. 46), die derselben Fahrzeugachse zugeordnet sind, und mit einer aktiven Stabilisierungsvorrichtung nach einem der Ansprüche 1 bis 13, wobei der Getriebeabtrieb (4) des ersten Getriebes (3) mit der linken Radaufhängung (44) wirkverkoppelt ist und der Getriebeabtrieb (18) des zweiten Getriebes (17) mit der rechten Radaufhängung (46) wirkverkoppelt ist.

15. Fahrzeug, insbesondere Kraftfahrzeug, beinhaltend eine aktive Stabilisierungsvorrichtung nach einem der Ansprüche 1 bis 13 oder beinhaltend ein Fahrwerk nach Anspruch 14.
